Europäisches Patentamt

European Patent Office

Office européen des brevets

(11) Publication number: **0 484 867 A1**

## EUROPEAN PATENT APPLICATION

(21) Application number: **91118810.0**

(22) Date of filing: **05.11.91**

(51) Int. Cl.5: **C02F 3/28**, C02F 3/30

(30) Priority: **09.11.90 IT 2201090**

(43) Date of publication of application:
**13.05.92 Bulletin 92/20**

(84) Designated Contracting States:
**AT BE CH DE DK ES FR GB GR IT LI LU NL SE**

(71) Applicant: **ECOLMARE S.p.A.**
**Via delle Rose, 50/a**
**I-80063 Piano Di Sorrento ( Prov. of**
**Naples)(IT)**

(72) Inventor: **Kimchie, Shlomo**
**Harrishonim 72 a St.**
**Kiryat Haim- Haifa 26302(IL)**
Inventor: **Shelef, Gedalish**
**Ayalon 9St.**
**Haifa 34336(IL)**

(74) Representative: **Gervasi, Gemma et al**
**NOTARBARTOLO & GERVASI Srl Viale**
**Bianca Maria 33**
**I-20122 Milan(IT)**

(54) **Process for the utilization of organic wastes for producing biogas and agricultural products.**

(57) Process for treating organic wates, particularly piggery waste effluents (PWE) by menas of a series of biologically integrated treatment process, whereby organic contanninating compunds are transformed in useful products: biogas and products useful in agriculture and horticulture. The process comprising a) separation of the wastes into a solid and a liquid fraction; b) high-rate anaerobic digestion of said liquid fraction; c) anaerobic digestion of the solid fraction from step a together with the excess of anaerobic sludge; d) separation of sludges from step c; e) aerobic maturation of the solid fraction from step d and f) separation of the liquid effluent from step b of the biomass.

EP 0 484 867 A1

## Background of the Invention and Prior Art

The present invention relates to a process by which substantially liquid organic wastes, particularly piggery waste effluents (PWE) are biologically treated in a integrated way that solves the pollution problems caused by these wastes allowing to transform them in biogas and products useful in the agriculture, in particular enriched growth media and fertilizing substances. Modern piggeries produce large volumes of PWE with a high content of organic wastes. Organic matter and the nutrients, for instance nitrogen and phosphor, cause serious environment pollution. Until recently, the most convenient way of treating said wastes was the use of a series of settling and biological ponds. This system causes serious problems, in particular the need of large land areas, the possibility of contamination of water resources and the production of foul odors.

Recently, more intensive biological treatment processes have been suggested in the patent literature. In these processes, the wastes are anaerobically digested in controlled temperature closed reactors that require about 10 to 20 days of retention time. The organic materials are bioconverted into biogas while the digested effluent is usually disposed of by land spreading (Pozzi, V. World Patent Index (WPI) Acc. No. 80-67764 C/39), "Methane and fertilizer sludge produced from animal farm effluent by anaerobic fermentation at 35°C for about fifteen days").

Other patents are dealing with improving the process efficiency by more sophisticated means, for example by utilizing differential retention times for the solids and liquid fractions of the waste in a tower shaped digester (Franz, J. and Vollmer, G.R., WPI Acc. No. 89-207457/29). The same authors suggested a process in which the high solids and low solids fractions are separated and digested in separate reactors and under different retention times (Franz, J. and Vollmer, G.R., WPI Acc. No. 87-299516/43).

Increase of process efficiency has been suggested by separating the acid-forming stage from the methane-forming stage (Franz, J., Vollmer, G.R. and Holzapfel, H., WPI Acc. No. 85-122985/21). A somewhat similar patent includes additional polishing stage of the effluent in an algae pond: (Duhenil, J.P., Chanart, J.M., and Andouze, B., WPI Acc. No. 81-76238D/42.

A possibility to combine aerobic and anaerobic stages in order to increase process efficiency and biogas yield was suggested: (Vollmer, G.R. and Linke, B., WPI Acc. No. 87-257334/37. A possibility of using the processed wastes' solids as a compost was suggested by Balu who invented a multi-step process with different temperatures and process times in each step. The compost in Balu's invention is a product of an anerobic process (Balu, A., WPI Acc. No. 84-294604/48.

## Object of the invention

It is an object of the invention to provide a process by which substantially liquid organic waste effluents, especially PWE (piggery waste effluents) will be intensively treated to reduce their organic waste loading while producing valuable byproducts that reduce effectively the cost of the treatment.

Another object of the invention is therefore to provide a method by which the suspended solids are removed from the liquid thus making the liquid suitable for high-rate anaerobic treatment.

It is a further object of the invention to provide a process of high-rate anaerobic digestion for the liquid PWE fraction with high productivity of biogas for energy purposes. This process also produces effluents suitable for irrigation or as a feedstock for biological polishing ponds that yield recycled washing water for the pigs' pens and high-protein biomass (algae or duckweed) for animal feed.

It is also an object of the invention to provide a method for anaerobic treatment of the solid fraction separated from PWE and other liquid wastes such as effluents from milk treating plants and other food industry wastes with high biogas productivity and efficient bio-stabilization of the solids which are later processed by aerobic bio-stabilization to obtain a stable fiber-rich product, suitable as a component of plant growth media-PWDERM (Piggery Waste Derived Enriched Root Medium).

The principal advantages of the process in the present invention are:

1. High biogas productivity.

2. Production of high value PWDERM product by high bio-stabilization of the solid fraction.

3. Low demand for land.

4. Saving in reactors volumes.

5. Large part of the water may be recycled for irrigation and/or high protein biomass production and washing water for the pigs pens.

Detailed description of the invention

The present invention provides a process by which substantially liquid organic wastes, especially piggery waste effluents (PWE),are treated in a series of physical and biological integrated steps. The process according to the invention comprises the following steps:

a) separation of the wastes into a solid and a liquid fraction;

b) high-rate anaerobic digestion of said liquid fraction to produce biogas, a liquid effluent and an excess of anaerobic sludge;

c) anaerobic digestion of the solid fraction from step a) together with the excess of anaerobic sludge from step b) in a reactor under stirring and continuous feed;

d) separation of the sludges from step c) into a solid and a liquid fraction and partial recycle of the liquid fraction to the anaerobic digestion of step b);

e) aerobic maturation of the solid fraction from step d) together with the non-recycled part of the liquid fraction;

f) separation of the liquid effluent from step b) of the biomasses useful as animals feed and recycle of the liquid part of said effluent.

The first step is separation of the PWE or other liquid waste (SEP-I) into solid and liquid fractions. This may be achieved by any of a number of separation techniques such as sedimentation, filtration or centrifugation. The separation step allows to remove from the liquid fraction most of the suspended matter, leaving a more or less clear effluent. Clear effluent in this context is defined as a liquid which forms no more than 1% V/V of a fine particle matter sediment during 2 hours settling test done in an Imhoff funnel or similar equipment.

The clear effluent is fed to a high-rate anerobic digestion (DIG-I). The anaerobic digester should preferably be of a UASB type (Upflow Anaerobic Sludge Bed) or of a contact process type. Anaerobic filter type reactor is less suitable since clogging problems are expected to appear as a result of inert particles present in the liquid. When a UASB type reactor is chosen, it is recommended to have an option of effluent recirculation through the reactor to help in preventing clogging problems. A typical hydraulic retention time in DIG-I is in the range of 0.5 to 2.5 days. The biogas produced at this stage is directed to a storage/utilization system, where it is added to the biogas produced by the other digester of the system (DIG-II), which is of the CSTR type (continuous stirred reactor).

The high-rate digester (DIG-I) may be of either of the mesophile type, that is operating at a temperature of between 28 and 38°C, or of the thermophile type, operating at between 45 and 60°C, in dependence of the type of biomass employed, in particular of the type of methanogenic bacterium contained in it.

According to a preferred embodiment of the process according to the invention, the biomasses active in stage b) , particularly the methanogenic bacteria, are gradually acclimatized and made suitable to the specific operative conditions.

Excess anaerobic sludge, which includes also some inert suspended matter, and is formed at a constant daily rate of about 2% (V/V) of the existing sludge in the aforementioned high-rate digester (DIG-I), is transferred once very few weeks, typically every two to ten weeks, to the digester (DIG-II). This is done mainly to prevent sludge accumulation in DIG-I but it also helps in accelerating the gas production rate in DIG-II and improves its biogas yield, biomasses being transferred which are completely acclimatized and suitable to the type of feeding employed in the process.

The liquid effluent from DIG-I may be employed directly as a liquid fertilizer or it may be polished to eliminate most of the suspended material, to reduce COD and BOD and to reduce or eliminate the amount of materials containing nitrogen and phosphor, employing biomass oxidation ponds with algae and duckweed.

The polished effluent is recycled for washing of the pigs pens while the algae and duckweed biomass is used as a high protein feed for the animals.

According to a preferred embodiment of the process according to the invention, the biogass produced in the b) and c) digestion stages is employed to generate the heat necessary to keep the digestor temperature at the optimum treatment level.

The solid fraction separated in stage a) is stabilized through two successive biological treatments. The first is a anerobic digestion in a CSTR type digestor (DIG-II), while the second consists essentially of a aerobic ripening performed in suitable apparatus as will be described later.

Typical retention time of the material in this reactor (DIG-II) is in the range of 7.5 to 15 days. The biogas produced is stored/utilized together with that produced by DIG-I. The digested slurry from DIG-II is separated into solid and liquid fractions. The separation can be obtained during the sedimentation or the filtering or the centrifuging steps.The liquid fraction is returned for further treatment to DIG-I while the solid

3

fraction is undergoing a second aerobic stabilization stage-Aerobic Maturation. The degree of sophistication of the equipment for the maturation step may be selected according to the size of operation and other local conditions. It may vary from simple windraw piles and up to controlled aeration-mechanized technology.

Process time for that stage will vary in the range of 3 to 8 weeks, with shorter processing time for higher technologies. The stabilized product of this stage is different from other products described in the patents listed above under "Background of the Invention and Prior Art". This product, entitled PWDERM (Piggery Waste Derived Enriched Root Medium) is in a higher bio-stabilization degree, hence, it has negligible self-demand for oxygen when put in the soil. The material's volume does not shrink when put in pots or other containers as a growth medium. The PWDERM contains only a small proportion of fine particles, hence it has a high Air Holding Capacity. PWDERM was found free of pathogens and was proven to be an effective component in growth media for intensive horticulture in plant nurseries, greenhouses and home-gardening.

According to a preferred embodiment of the process according to the invention, to the CSTR digestor (DIG-II) of stage c) solid vegetable waste in small pieces, e.g. wheat- or barley straw, tomato plants, macrophyte mass, are added, to obtain additional biogas and digested fibers.

Said vegetable wastes may also be added directly in stage e) of aerobic digestion of the high solid fraction.

The aerobically mature material (similar to humus or compost) obtained from stage e) of the process is advantageously employed in horticulture as such or as a component of mixtures for plant nurseries or to any fertilizing or soil conditioning purpose.

As we said supra, it was evident for the expert in the field that, although in the description reference was made chiefly to the treatment of piggery waste effluents (PWE), the described process may easily be employed for other types of wastes, such as effluents from dairies and other food industry wastes.

The invention will now be described in more detail in the examples that follow.

EXAMPLE 1

Wastes from a piggery (PWE) were fed to a "Sweco" vibrating separator of 600 mm diameter at a rate of 1.5 to 3 m$^3$/h.

The separator was equipped with two screens, an upper screen of 40 mesh (0.39 mm openings) and a lower, finer one of 200 mesh (0.07 mm openings).

The average volume of the resulting liquid phase (I) was 85% of the volume of the employed PWE, and varied between 80 and 90%.

The volume of the fraction of a high solid content (VS) was 15% of the volume of the initial PWE, varying between 10 and 20%.

The COD value (Chemical Oxygen requirement) of the PWE as such was 20,000 ppm, while the COD value in the separated liquid fraction was 4,800 ppm.

The total solid concentration (TS) of the fraction with a high solid contents (VS) was 115 g/l (equal to 11.5% w/v).

Part of the liquid fraction from the separator was kept in a room at 4°C for four weeks, to be then fed to a anaerobic high rate digestor (DIG-I).

The reactor (DIG-I) was of anaerobic upflow type with a sludge layer (UASB) with an operating volume of 8 1, in the form of a column with two main compartments of 4 1 each. The upper compartment, where the main biological activity took place, was of 60 mm diameter and 142 cm high.

The reactor (DIG-I) was thermostatically heated to 35°C by means of a hot water jacket. The upper compartment had a diameter of 14 cm, was 30 cm high and was connected through a jacketed funnel to the lower column. The upper part served essentially as settler. Collection, measurement and analysis of the gas produced was done with conventional methods.

Reactor DIG-I was fed automatically and its contents were recycled by means of a diaphragms pump (Herstelling, Type E 0212) controlled by a timer. The liquid fraction was pre-heated to 25-30°C and automatically fed to DIG-I during the day.

The recycling rate (R) was maintained at 6.8 value by adjustment of the pump flux.

The CH4 content was measured by gas chromatography. The results of the DIG-I stabilized operation are reported in Table I.

4

TABLE I -   Main   operation parameters of  a  UASB  reactor fed

with   separated  liquid  fraction  from  PWE

| | |
|---|---|
| Temperature | 35°C |
| Retention time | 2 days |
| Volumetric organic loading (expressed as COD) | 2.62  g/l.d$_f$* |
| Volumetric organic loading (expressed as amount of solids) | 1.87 g/l.d$_f$* |
| Influent COD concentration | 5,236 mg/l |
| Effluent COD concentration | 583 mg/l |
| % removal of COD | 89% |
| Volumetric CH$_4$ production rate | 0.77 1/l.d |
| Methane production yield | 0.30 1/g COD$_f$* |
| pH Value | 8.1 |

\*   Index letter f = fed

The results are averages of 3 months steady-state operation of two duplicate UASB reactors.

Part of the high solid fraction (VS) coming from the Sweco separator was kept in a room at 4°C for 4 weeks, to be then fed to an experimental CSTR type digestor (DIG-II).

The operation was in parallel, with two digestors working in the conditions reported in Table 2.

## TABLE 2 - Main operation parameters of a CSTR reactor fed with the high solid fraction (VS) separated from PWE.

| | |
|---|---|
| Working volume | 3 l |
| Feeding | Once a day |
| Operation temperature | 35°C |
| Mixing, intermittent | 1 min. every 30 min. |
| Gas measurement | by wet test meter |
| Gas analysis | by gas chromatography |
| Feedstock solid concentration (expressed as total solids) | 11.8% by wt. |
| Feedstock solid concentration (expressed as % of the high solid fraction (VS) on the total of the PWE feedstock) | 10.9% (v/v) |
| Retention Time | 10 days |
| Volumetric Loading Rate | 10.9 g VS/l.d |
| Volumetric gas production rate | 2.7 l (biogas)/l.d |
| Average $CH_4$ content in biogas | 56.8% |

The calculated average biogas yield at this stage is of 0.25 l/g of solid product fed.

Digested slurry, prepared in the CSTR reactor, was collected daily and stored in a 4°C cold room throughout the experiment period (about 3 months). The digested slurry was then treated with the vibrating "Swaco" separator described supra to separate the solid fraction from the water which was discharged. The resulting solid fraction was aerobically matured in a controlled reactor, built of a 30L volume vessel and equipped with a heating jacket and controlled air supply system. Air was supplied through the bottom of the reactor for 5 min. every hour by a timer controlled blower. The maturing material was turned manually twice in the first week and thereafter once every week. Total maturation time was 8 weeks. During the maturation process the material changed color from brown to black and also acquired a typical odour of forest soil. The weight loss during maturation was about 50% while the volume loss was about 40% only. Lignin content increased from 21% to 27% in the matured product.

The matured product, entitled PWDERM, (Piggery Waste Derived Enriched Root Medium) is similar in lignin content to peat moss and can be used for wide spectrum of agricultural and horticultural purposes.

## Claims

1. A process for the treatment of substantially liquid organic wastes comprising the following steps:
   a) Separation of the organic waste into a solid and a liquid fraction.
   b) High-rate anaerobic digestion of said liquid fraction producing biogas, liquid effluent and excess anaerobic sludge.

c) Anaerobic digestion of said solid fraction from step a) together with the excess of anaerobic sludge produced in step b) in a digester of the CSTR (Continuously-fed Stirred Tank Reactor) type.

d) Separating the digested slurry from step c) into solid and liquid fractions and partial recycling of the liquid fraction to the anaerobic digestion reactor of step b).

e) Aerobic maturation of said solid fraction coming from step d) together with the non-recycled part of the liquid fraction.

f) Separation of the liquid effluent coming from step b) from the biomasses useful as animal feedstock and recycle of the aqueous part of said effluent.

2. Process according to claim 1, characterized in that said anaerobic digestion of step b) is carried out in a high rate digester of the upflow anaerobic sludge bed (UASB) type.

3. Process according to claim 2, characterized in that said UASB high rate digester is equipped for the recycling of its contents.

4. Process according to claim 1, characterized in that the anaerobic digestion of step b) is carried out for a permanence time of between 0.5 and 2.5 days.

5. Process according to claim 1, characterized in that the anaerobic digestions of steps b) and c) are performed with mesophile biomasses at a temperature of between 28° and 38°C.

6. Process according to claim 1, characterized in that the anaerobic digestions of steps b) and c) are performed with thermophile biomasses at a temperature of between 45° and 60°C.

7. Process according to claim 1, characterized in that the anaerobic digesting of steps b) and c) are performed with biomasses gradually acclimated and suited to the specific operative conditions.

8. Process according to claim 1, characterized in that the excess anaerobic sludge is transferred to step c) every few weeks, from 2 to 10 weeks.

9. Process according to claim 1, characterized in that the biogas produced in digestion step b) and c) is employed for generating the heat necessary to keep the digester temperature of the optimum operation level.

10. Process according to claim 1, characterized in that the anaerobic digestion of step c) is carried out for a permanence time in the reactor of between 7.5 and 15 days.

11. Process according to claim 1, characterized in that the aerobic maturation of step e) has a duration of between 3 and 8 weeks.

12. Process according to claim 1, characterized in that step e) of aerobic maturation is performed on masses of residues kept on the open air.

13. Process according to claim 1, characterized in that step c) of anaerobic digestion is performed adding to the reaction mass solid vegetable wastes in small pieces.

14. Process according to claim 1, characterized in that step e) of aerobic maturation is performed adding to the reaction mass solid vegetable wastes in small pieces.

15. Process according to claim 1, characterized in that the aerobically mature material obtained from step e) of the process is used in horticulture as such or as a component of mixtures for growing plants or for any fertilizing or soil conditioning purpose.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8 900 979 (TECHNOAGRAR CONSULTING AK.) <br> * the whole document * <br> --- | 1,9 | $CO_2F3/28$ <br> $CO_2F3/30$ |
| A | EP-A-0 302 545 (SNAMPROGETTI) <br> * page 3, line 2 - line 28 * <br> --- | 2-4 | |
| A | FR-A-1 069 688 (BRITISH ORGANIC PRODUCTS LTD.) <br><br> * page 1, column 1, paragraph 1; claim 3 * <br><br> ----- | 1,6,14, 15 | |
| | | | TECHNICAL FIELDS SEARCHED (Int. Cl.5 ) <br><br> $CO_2F$ |

The present search report has been drawn up for all claims

| Place of search | Date of completion of the search | Examiner |
|---|---|---|
| THE HAGUE | 04 MARCH 1992 | GONZALEZ ARIAS,M.L. |

EPO FORM 1503 03.82 (P0401)